# EUROPEAN PATENT APPLICATION

(11) **EP 4 734 591 A1**
(43) Date of publication of application: **29.04.2026**
(21) Application number: 24208652.8
(22) Date of filing: 24.10.2024
(51) Int. Cl.: H04W 24/02, H04W 88/08, H04W 16/18

(54) **DEVICE AND METHOD FOR OPERATING A COMMUNICATION SYSTEM COMPRISING ONE OR MORE PROPAGATION ENVIRONMENT ELEMENTS**

(71) Applicant: NTT DOCOMO, INC., Tokyo 100-6150 (JP)
(72) Inventor: ARFAOUI, Afaf, 80687 Munich (DE); KATSALIS, Konstantinos, 80687 Munich (DE); TANAKA, Itsuma, 80687 Munich (DE); SAMA, Malla Reddy, 80687 Munich (DE); TRIAY MARQUES, Joan, 80687 Munich (DE); ONODA, Takanobu, Tokyo, 100-6150 (JP)
(74) Representative: Viering, Jentschura & Partner mbB Patent- und Rechtsanwälte

(57) **Abstract**

According to one embodiment, a method for operating a communication system comprising one or more propagation environment elements is described, the method comprising receiving a request for checking whether a configuration of the one or more propagation environment elements fulfils a predetermined criterion, collecting data from one or more controllers of the one or more propagation environment elements, one or more base stations using the one or more propagation environment elements according to the configuration and/or one or more mobile terminals using the one or more propagation environment elements according to the configuration, checking, using the collected data, whether the configuration of the one or more propagation environment elements fulfils the predetermined criterion and sending a report of the verification result, as well as triggering, in reaction to a result of the checking being that the configuration of the one or more propagation environment elements does not fulfil the predetermined criterion, a negotiation for a change of the configuration and/or of the predetermined criterion.

## Description

The present disclosure relates to communication devices and methods for operating a communication system comprising one or more propagation environment elements.

A communication system may include propagation environment elements which can interact with one or more of the communication system's radio access networks (RANs) and can direct the propagation of radio waves to mobile terminals. For example, towards 6G, programmable metasurfaces like Intelligent Reconfigurable Surfaces (RISs), are expected to play a key role for extending the RAN capabilities close to mobile terminals. Accordingly, efficient mechanisms to make use of the capabilities of propagation environment elements are desirable.

According to one embodiment, a method for operating a communication system comprising one or more (e.g. programmable) propagation environment elements is provided, the method comprising
- receiving a request for checking whether a configuration of the one or more propagation environment elements fulfils a predetermined criterion (which may comprise multiple (sub-criteria such as feasibility, achievable communication quality target, etc.)
- collecting data from one or more controllers of the one or more propagation environment elements, one or more base stations using the one or more propagation environment elements according to the configuration and/or one or more mobile terminals using the one or more propagation environment elements according to the configuration
- checking, using the collected data, whether the configuration of the one or more propagation environment elements fulfils the predetermined criterion and
- triggering, in reaction to a result of the checking being that the configuration of the one or more propagation environment elements does not fulfil the predetermined criterion, a negotiation for a change of the configuration and/or of the predetermined criterion.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 illustrates a propagation environment (PE).
Figure 2 illustrates a communication arrangement including a PE controller (PEC) controlling one or more PEEs (propagation environment elements) to allow communication between one or more base stations and one or more mobile terminals via the one or more PEEs.
Figure 3 shows a flow diagram illustrating a verification and validation workflow according to an embodiment.
Figure 4 illustrates the interaction of a PE-VeF (PE-Verification Function) with other entities according to an embodiment.
Figure 5 shows a flow diagram illustrating a verification process according to an embodiment.
Figure 6 shows a flow diagram illustrating a method for operating a communication system comprising one or more propagation environment elements according to an embodiment.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for operating a communication system comprising one or more propagation environment elements, the method comprising:
   - receiving a request for checking whether a configuration of the one or more propagation environment elements fulfils a predetermined criterion;
   - collecting data from one or more controllers of the one or more propagation environment elements, one or more base stations using the one or more propagation environment elements according to the configuration and/or one or more mobile terminals using the one or more propagation environment elements according to the configuration;
   - checking, using the collected data, whether the configuration of the one or more propagation environment elements fulfils the predetermined criterion; and
   - triggering, in reaction to a result of the checking being that the configuration of the one or more propagation environment elements does not fulfil the predetermined criterion, a negotiation for a change of the configuration and/or of the predetermined criterion.
Example 2 is the method of example 1, wherein the predetermined criterion comprises that the configuration is feasible for the one or more propagation environments (e.g. that the one or more propagation environments have the capabilities to support the configuration, i.e. that they can be configured according to the configuration).
Example 3 is the method of example 1 or 2, wherein the predetermined criterion comprises that a communication quality target for a communication between the one or more base stations and the one or more mobile terminals can be met.
Example 4 is the method of any one of examples 1 to 3, wherein the negotiation includes a negotiation about updating the communication quality target.
Example 5 is the method of any one of examples 1 to 4, wherein the negotiation is a negotiation between the one or more controllers of the one or more propagation environment elements and a requesting entity which has requested the more controllers of the one or more propagation environment elements to support communication between the one or more base stations and the one or more mobile terminals by the one or more propagation environment elements.
Example 6 is the method of any one of examples 1 to 5, wherein the request specifies the predetermined criterion.
Example 7 is the method of any one of examples 1 to 6, wherein the request specifies the configuration.
Example 8 is the method of any one of examples 1 to 7, comprising triggering that the one or more propagation environment elements are configured according to the configuration in reaction to the result of the checking being that the configuration of the one or more propagation environment elements fulfils the predetermined criterion.
Example 9 is the method of any one of examples 1 to 8, comprising transmitting a report including a specification of the result of the checking to the one or more controllers of the one or more propagation environment elements.
Example 10 is the method of example 9, wherein the report includes a proposal for a change of the configuration.
Example 11 is the method of any one of examples 1 to 10, wherein the configuration is an initial configuration of the one or more propagation elements for setting up communication between the one or more base stations and the one or more mobile terminals.
Example 12 is the method of any one of examples 1 to 11, wherein the data (that is collected) includes information about capabilities of the one or more propagation elements, a communication quality experienced by the one or more mobile terminals, a communication quality experienced by the one or more base stations and/or information about an association of propagation elements to mobile terminals (i.e. about which propagation element propagates signals to or from which mobile terminal; this information is e.g. derived from an angle of arrival at the base station).
Example 13 is the method of any one of examples 1 to 12, wherein the predetermined criterion comprises that a predetermined association of the one or more base stations to the one or more propagation elements and/or of the one or more base stations to the one or more mobile terminals is used in the communication between the one or more base stations and the one or more mobile terminals.
Example 14 is a communication system component (PE-VeF in the examples below), configured to perform a method according to any one of examples 1 to 13.

It should be noted that one or more of the features of any of the examples above may be combined with any one of the other examples. In particular, the Examples described in context of the method are analogously valid for the device.

According to further embodiments, a computer program and a computer readable medium comprising instructions, which, when executed by a computer, make the computer perform the method of any one of the above Examples are provided.

In the following, various examples will be described in more detail.

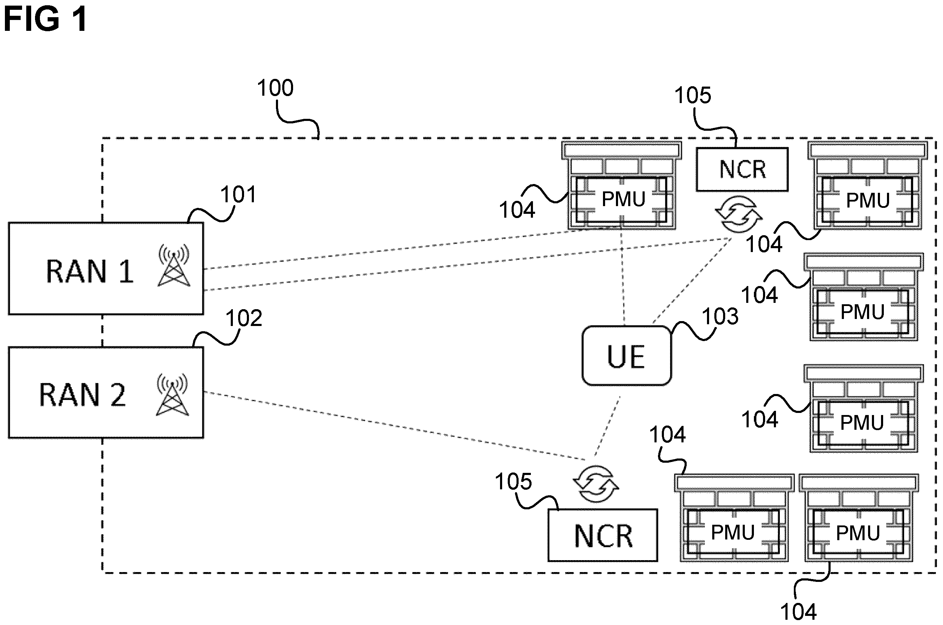

Figure 1 illustrates a propagation environment 100 in which two RANs or RAN components 101, 102 (e.g. a first base station 101 and a second base station 102) exchange radio waves with a mobile terminal (also referred to as UE (user equipment) herein) 103. The propagation environment 100 comprises multiple propagation environment elements (PEEs), which in this example, includes multiple PMUs 104 and multiple network-controlled repeaters (NCRs) 105. The radio signal transmission between a RAN and a UE may include multiple hops, i.e. the radio signal may be propagated via multiple PEEs.

For example, a telecommunication operator has provisioned the PEEs 104, 105 from an external service provider owning the PEEs. Alternatively, the telecommunication operator owns the PEEs.

The PEEs 104, 105 can be fully programmable (like in the case of RIS (Reconfigurable Intelligent Surfaces), partially programmable (for example programmable only during fabrication) or not programmable. PEEs 104, 105 can be passive (Non-wavefront amplifying) or active (Wavefront-amplifying). So, besides Programmable Metasurface Units (PMUs) 104 (an example of which are Reconfigurable Intelligent Surfaces (RIS)) and Network Control Repeaters (NCRs) 105 (which amplify incoming signals and retransmit them, but cannot be programmed), PEEs may also include surfaces without any programmability capabilities but with special scattering, reflection, refraction characteristics (e.g., metallic surfaces).

A PEE controller (PEC) can configure the PEEs 104, 105 to serve end users, the mobile terminal 103 in the example of figure 1. For example, the PEC can control through the appropriate configuration whether a signal is transmitted to the UE 103 from a base station 101, 102 directly or via one or multiple PEEs 104, 105. In this manner, the PEEs 104, 105 can be used to facilitate communication between the mobile terminal 103 and a base station 101, 102 for cases, for example, where direct communication between the base station 101, 102 and the mobile terminal 103 cannot be established due to LOS (line of sight) blockage.

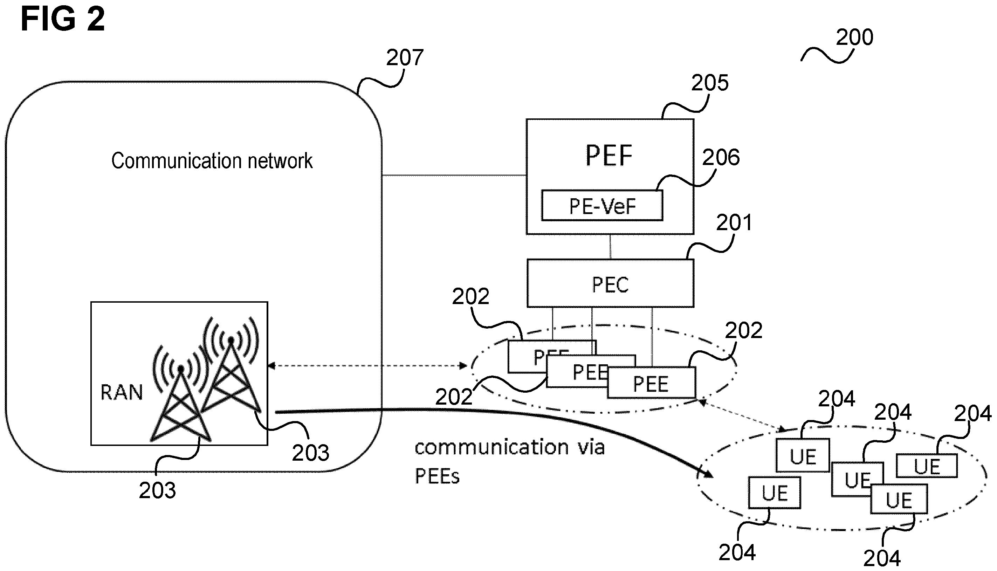

Figure 2 illustrates a communication arrangement 200 including a PE controller (PEC) 201 controlling one or more PEEs 202 to allow communication between base stations 203 and mobile terminals 204 via the one or more PEEs 202. The base stations 203 are part of a communication network 207 such as a mobile communication system according to 3GPP (Third Generation Partnership Project), or a non-3GPP communication network, such as a WiFi.

The PE Controller (PEC) 201 configures and manages the one or more PEEs 202 which may include PEEs of different technologies (e.g., as mentioned above, PMUs and NCRs).

The communication arrangement 200 further comprises a Propagation Environment Function (PEF) 205 which can interact with the communication network 207 (e.g. with a 5GS, 4GS, WiFi etc.) and the PEC 201 (possibly with multiple PECs).

The PEF 205 acts as a PEE orchestrator. In particular, the PEF 205 includes a Propagation Environment Verification Function (PE-VeF) 206. It should be noted that although the PE-VeF 206 is called a PE Verification Function, it may also (or instead) serve for validation (e.g. a validation whether a target communication quality is met).

Similarly, when an example regarding verification is given herein, this may also apply to validation (or both verification and validation). In other words, for simplicity, verification is used as an example for several embodiments, but those embodiments may analogously be applied for validation or both verification and validation. In general, a certain criterion of a PEE configuration is to be checked by the PE-VeF (e.g. that the configuration is feasible or that a communication target quality is met). So, when verification or validation is mentioned in the following in an example, the example may also be applied to any other criterion regarding a configuration.

The PE-VeF 206 is in charge of one or more of the following:
- Verifying and validating requested configurations of the PEEs (requested by a caller entity, such as a base station 203)
   ∘ either during a provisioning phase or after it; whenever a new configuration is requested
- Triggering a negotiation process with the respective caller entity (i.e. user of the verification or validation service) in case of infeasible or invalid configuration.

A validation may for example include monitoring the association BS-PEE (i.e. which base station 203 uses which PEE 202 for communication) and PEE-UE (i.e. which mobile terminal 204 uses which PEE 202 for communication) and verifying that the mobile terminals 204 are served as intended, i.e. that a communication quality target is met. A BS-PEE association together with a PEE-UE association gives an (end-to-end) BS-PEE-UE association. The association may be seen to be part of the configuration (or at least there may be an intended association which should be achieved by a certain configuration).

In particular, according to various embodiments, a method for operating a communication system comprising one or more propagation environment elements is provided which comprises a verification and/or validation whether a requested configuration fulfils a predetermined criterion, e.g. whether it is feasible and/or that a communication quality target can be met when using the configuration (e.g. with a certain BS-PEE and PEE-UE association and corresponding configuration of the PEEs).

In the following, the various components involved in the verification process (PEEs, CN (core network), RAN, etc.), the information exchanged between these components and the PE-VeF 206, the inputs of the PE-VeF 206 (with regard to the verification), the outputs of the PE-VeF 206, their recipients, and the way they are used as well as related signalling enhancements (e.g., between PE-VeF 205 and a 5GS (fifth generation mobile communication system), or between PE-VeF 205 and UEs 204) are described.

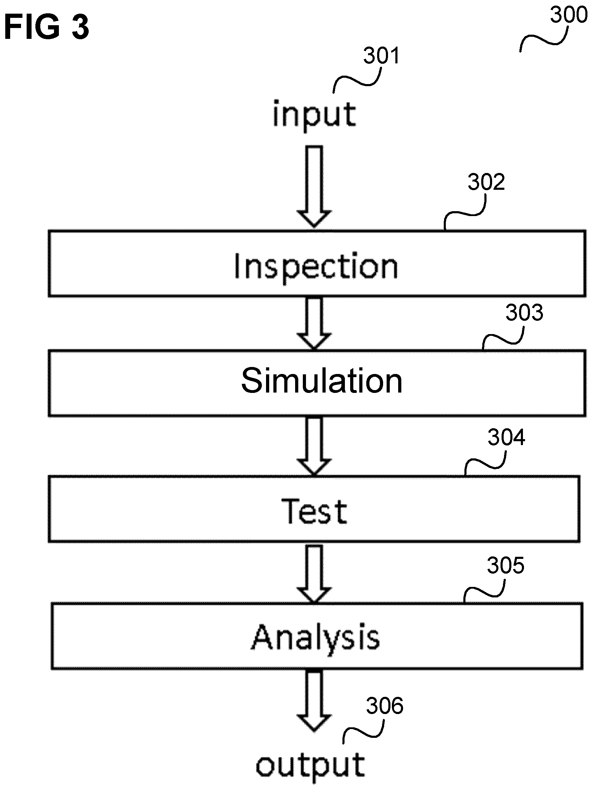

Figure 3 shows a flow diagram 300 illustrating a verification and validation workflow performed by the PE-VeF 206 when is called with input 301.

In 302, the PE-VeF 206 inspects the input, this may include analysis of a configuration of one or more PEEs 202 (e.g. with respect to schema errors etc.) and/or the analysis of PEE, UE and/or RAN operational status or other input.

In 303, the PE-VeF 206 simulates considered system parameters or sets-up a digital twin of the propagation environment.

In 304, the PE-VeF 206 then tests the requested operation (which may be indicated in the input 301, e.g. in form of a configuration to which the one or more PEEs 202 should be changed). This may again include the simulation of considered system parameters (which e.g. depend on the configuration to be changed). A simulation is for example performed in the case where a configuration cannot be tested directly in a real environment.

In 305, the PE-VeF 206 performs analysis, such as an assessment regarding the SLA (Service Level Agreement) conformance based on PEE operations and/or their configuration that considers the end-to-end communication path (i.e. communication between the respective base station(s) and the respective UE(s)).

The PE-VeF 206 then provides an output 306 and triggers the appropriate action. For example, if a configuration does not fulfil the predetermined (e.g. verification or validation) criterion (i.e. if verification or validation fails, e.g. if the configuration is not feasible (i.e. cannot be carried out, e.g. because a PEE does not support a required capability) or a communication quality target cannot be met or an SLA cannot be fulfilled with the configuration), the PE-VeF 206 triggers a negotiation process. The output 306 may also be a report of a result of the verification (and/or validation) process. If the result is positive (criterion is fulfilled) providing the output 306 for example triggers that the configuration is applied, i.e. that the PEEs are configured accordingly.

For example, the PE-VeF 206 performs one or more of the following verification and validation procedures of PEEs:
- verifies that a certain configuration of the PEEs 202 is feasible before making the request to the PEC 201 to configure the PEEs 202
- verifies that UEs 204 and the RAN (i.e. base stations 203) can support interaction with specific PEEs to enable connectivity services
- based on the configuration applied through the PEC 201, continuously or on demand checks the quality of the BS-PEE and PEE-UE associations (i.e., monitors the achieved communication quality and checks whether a respective communication quality is met). In other words, the criterion that is to be checked (or parts of it) may be checked during operation. For example, there is an initial check (when setting up communication) for feasibility and during operation a checking, whether a communication quality target is fulfilled.
- in case the verification or validation fails (e.g. either the verification of feasibility before the application of the configuration, or verification of the communication quality (or SLA) during operation) triggers a negotiation process with different entities (like the RAN, the PEC 201, and the UEs 204) to achieve a configuration which fulfils the respective criterion.

A single PE-VeF 206 can have a global view of the PEEs 202 or multiple PE-VeFs 205 can collaborate to perform end-to-end verification. Each PE-VeF 205 is responsible for a cluster of PEEs 202.

When called, the PE-VeF 206 for example initiates and performs a verification and validation workflow including:
- it verifies that a certain configuration of the PEEs 202 requested (either by the operator, the RAN or the UEs) is feasible.
- it verifies the fulfilment of operational and configuration requirements or SLA
- it verifies that the RAN and UEs can support interaction with specific PEEs.
- it verifies that the LTEs 204 are served via PEEs as intended based on the end-to-end association of RAN-PEE-UE decided by the operator, the RAN, or the UE, etc.

Due to the high number of parameters which need to be considered, the verification process can be extremely complex, while it is not always possible to test the configuration using the real operational system .

In this case, techniques like Network Digital Twin and AI/ML can be used by the PE-VeF. For example, the collected data from the real system can be used to train AI/ML models. These latter can be used to predict whether a configuration will achieve the goal of serving the UEs as intended. For example, a classification task can be performed using algorithms such as logistic regression, decision tree, SVM, etc., the PE-VeF can rely on AI/ML models to not only predict that if a failure is likely to happen, but also to know the reasons of the failure, the PE-VeF can then report it to the requester. Besides the traditional prediction techniques like regression analysis, PE-VeF can use offline reinforcement learning (or batch reinforcement learning), where the configuration can be presented as a set of predefined actions or policies and the goal is to evaluate only the rewards to see if those actions are beneficial (are leading to the goal of serving the UEs as intended) , these actions (e.g., configuring a PEE to reflect signal from BS1 towards UE4, or PEE to absorb signal coming from UE7) will be fed to a simulated environment and for each action the reward generated is observed by the PE-VeF. It then sums up the rewards and assesses whether the configuration is serving its goal. By observing the rewards, the PE-VeF can define at which step the configuration was deviating from its intended goal.

### Example 1: Verifying that a requested configuration of the PEEs is feasible and applicable:

A PEE 202 supports the communication between the RAN (i.e. one of the base stations 203) with the UEs 204. Uplink and downlink associations might be different for the PEE-RAN and PEE-UE connections.

Before applying a requested configuration through the PEC 201, the configuration originator (e.g., an Operations Support System (OSS) of the communication network 207 or the base station 203) sends a specification of the requested configuration (e.g. as input 301) PE-VeF 206 via a (e.g. first) interface (e.g. provided for this functionality).

Based on the information gathered from the UEs 204, the PEEs 202, the base station 203 and possibly radio measurements such as from a vector network analysers (VNAs), by the PEC 201 (e.g. via one or more second interfaces of the PE-VeF 206) and from core network components of the communication network 207, e.g., LMF (location management function), AMF, etc., (e.g. via one or more second interfaces of the PE-VeF 206) the PE-VeF 206 determines whether the requested configuration is feasible.

The PE-VeF 206 then performs the following operations:
- it checks whether the requested configuration conflicts with a present existing configuration
- it detects errors in the PEEs configuration if any
- it performs feasibility checking
- it informs the interested consumers whether the requested configuration can be established. The PE-VeF 206 can request the necessary updates from the originator of the requested configuration.

### Example 2: Verifying that an end-to-end communication is established and is providing the end users with connectivity as intended:

After the PEE 202 are configured the PE-VeF 206 continuously (or on demand) monitors the PEEs 202 through the PEC(s) 201 and also collects information from other sources like the RAN (i.e. base stations 203) and the UEs 204 to assess the quality and performance of the RAN-PEE and PEE-UE links (both downlink (DL) and uplink (UL) are considered).

By collecting data about e.g. latency, spectral efficiency, bandwidth, RTT, DL-AoD (Angle of Departure), UL-AoA (Angle of Arrival) from many different sources, the PE-VeF can determine whether the end-to-end (BS-PEEs-UEs) association is established and maintained according to the desired configuration.

For example, using DL-AoD or UL-AoA (computed by the UEs 204 or the base station 203 and the UE positions (e.g. determined by core network functions), the PE-VeF 206 learns which PEEs 202 are used to serve which UEs 204. From knowledge of signals power (obtained from UEs 204 and VNAs), the PE-VeF 206 can infer whether the PEEs 202 configuration leads to intended performance and whether there is a breach of the SLA (between the operator and the PEEs provider).

Further, the PE-VeF 206 can monitor the communication quality (i.e. communication performance). It can determine the communication quality from packet level QoS (quality of service) characteristics (which it e.g. obtains through RAN and UE reports) and/or PHY layer quality, like SNR level.

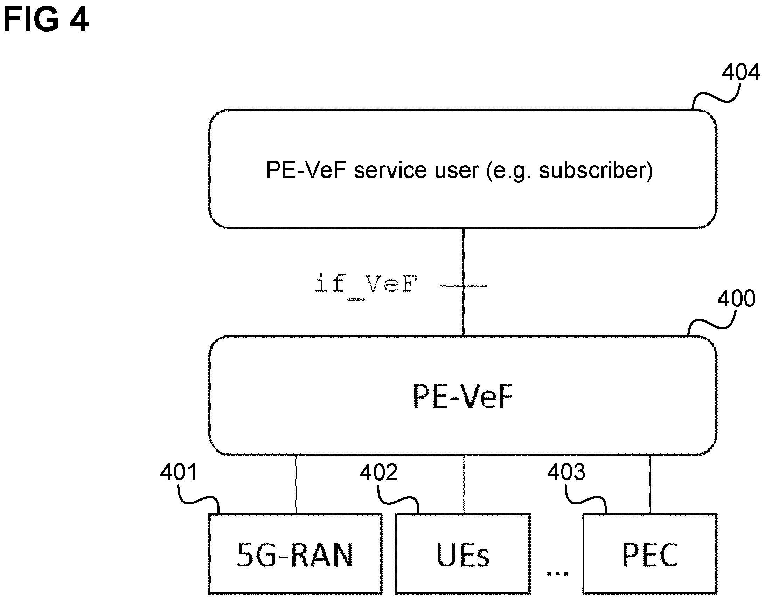

Figure 4 illustrates the interaction of a PE-VeF 400 with other entities.

The PE-VeF 400 interacts based on some event (e.g. upon a request from OSS, RAN, a UE etc.) with different entities (BSs 401, UEs 402, PEC 403 etc.) to collect input data (e.g. input data 301) used to perform verification assessment.

Examples for input data the PE-VeF 400 gathers and uses to perform verification include for example:
- PEE configuration (e.g., RIS configuration)
- UE statistics or (e.g. measurement) reports (e.g., UE location)
- RAN statistics or (e.g. measurement) reports (e.g., beamforming configuration)
- core network statistics/reports (e.g., number of active sessions)
- SLA intended associations (RAN-PEE, PEE-UE for both downlink and uplink), QoS expected per association etc.

The PE-VeF 400 for example exposes an if_VeF interface used to manage verification operations. Though the if_VeF interface, a caller 404 (i.e. a consumer of the service provided by the PE-VeF, e.g. a subscriber of the PE-VeF verification service) can manage the verification process and can receive the verification result. In other words, through the interface if_VeF, a verification management operation is supported. The caller 404 may for example be an OSS, a base station, a mobile terminal etc.

The caller 404 (e.g. OSS) can trigger the verification process via the if_VeF interface. Alternatively, the communication network (e.g. 5GS or future 6GS) 204 can trigger the verification process in reaction to some event that has occurred (e.g., connectivity lost with a UE 204).

The PE-VeF 400 can also autonomously begin monitoring of input data and performing periodically the BS-PEE and PEE-UE links connectivity verification.

The verification management operation gets a VerificationTestDescriptor as input from the caller 404. The VerificationTestDescriptor describes one or more of the following:
- when to perform the verification process, e.g. start time, end time, periodicity (e.g. with specification of an interval)
- VerificationTestDescription: specifies a verification and/or validation test description plus the type of test, type of evaluation, elements to be tested etc.
   ∘ For example, the test is about BS-PEE link or end-to-end
   ∘ QoS characteristics to be tested-verified (e.g., SNR levels received by the UE) etc.
   ∘ How to perform the verification and/or validation process (e.g., using digital twins)
- VerificationTestInput: specifies the input information of the verification test case to be used.
- RequiredVerificationTestOutput: Specifies the output information of the verification test.
- AllowPredictions: whether the PE-VeF may use predictions for the checking. For example, based on information collected for instance from the gNB, PMUs and UEs (such as arrival/departure rate of UEs, quality of signals, etc) the PE-VeF can predict traffic burst.
- Other, like policies related to PEE-RAN associations, PEE-UEs associations etc.
- ActionsOnFailure: describes actions upon verification failure that are performed by PE-VeF
   ∘ For example,
      ▪ Trigger negotiation to change PEE configuration
      ▪ Trigger UE dissociation by PEC, the UE, or the RAN
      ▪ Trigger UE handover can be done by changing the serving RAN, PEE, or RAN-PEE pair.

Input data the PE-VeF 400 gathers from entities other than the caller 404 (e.g. BSs 401, UEs 402, PEC 403 etc.) may be for example one or more of the following:
- UE measurements or statistics, in particluar information about the communication quality the UE experiences, e.g.
   ∘ SINR (signal to interference and noise ratio) SNR (signal to noise ratio), RSRP (reference signal received power), RSRQ (reference signal received quality), received signal strength, e.g. RSSI (received signal strength indication), etc.
   ∘ CQI (channel quality indicator)
   ∘ QCI (QoS class identifier) or 5QI (5G QoS identifier)
- RAN measurements or statistics
   ∘ Power of transmitted signals
   ∘ Cell ID, gNB ID (base station identification)
   ∘ UL-AoA (Uplink Angle of Arrival)
   ∘ information about the communication quality the base station experiences, e.g.
      ▪ BLER (block error rate)
      ▪ RTT (round trip time)
- core network (e.g. 5GC) measurements or statistics
   ∘ UE position(s)
   ∘ DL-AoD (Downlink Angle of Arrival)
   ∘ DL-TDOA (Downlink Time Difference of Arrival).
- PEE configuration
   ∘ PEE circuit design (active, passive, or hybrid PEE)
   ∘ operating frequency (FR1 (5G NR frequency range 1), FR2 (5G NR frequency range 1), THz, PEE bandwidth of influence)
   ∘ operation mode (absorption, refraction, reflection, etc.).
   ∘ communication duplex mode.
   ∘ PEE position

The PE-VeF 400 for example uses the Angle of Arrival (AoA) or the Angle of Departure (AoD) to analyse from which PEE a UE receives a signal (and report accordingly to the caller 404). The PE-VeF 400 for example uses the CQI, BLER, and RTT to verify if the RAN-PEE-UE association is yielding the expected performance (i.e. whether a communication quality target is met). The PE-VeF 400 for example uses the PEE operating frequency, circuit design, etc. to decide about the feasibility of a requested configuration.

Table 1 gives an example of a PEE (in this example a PMU) configuration.

**Table 1**

| Attribute | Content | Description |
|---|---|---|
| hwDesign | String | Active: consists of RF circuits and consecutive signal processing units. Passive: consists of numerous passive components that reflect the incoming waves with a controllable phase shift. Hybrid: capable of reflecting their impinging signal, while simultaneously sensing a portion of it. |
| operFreq | String | Sub-6GHZ band, mmWave band, TeraHertz band, or unlicensed bands |
| bandwidthInfl uence | Integer | Measures the unwanted emissions created by PMU reflections which can cause interference to different bands than the incident signal. |
| channelAccess Mechanism | String | For PMUs to operate in the unlicensed bands, channel access mechanisms may need to be considered, e.g., Listen Before Talk (LBT). |
| centerFreq | Integer | Center frequency on which RIS control channel and data channel operate. |
| duplexMode | String | Examples: TDD, FDD, full-duplex. |
| guardPeriod | Integer | If PMU operates in the TDD mode, a guard period may be configured for the PMU when switching between DL/UL to ensure that the UL and DL reflection/reception at the PMU do not interfere. |
| phaseShift | String | Discrete or continuous. |
| phaseShiftGra nularity | 1,2,3 | If the phase shift type is discrete than a phase shift granularity need to be specified. |
| possibleOper | Not specific d | The total number of PMU elements can range from 10 to more than 1000. If the PMU passive, then all elements have the same configuration (i.e., operating mode). If the PMU is active or hybrid need to indicate for each operation the number of element to configure. |
| numElementC onfig | Not specific d | In case of active PMU, the number of element to configure for each operating mode need to be specified. |
| ServedUsers | Integer | Number of users served by a PMU. |

Table 2 gives an example of an input from a UE 402 to the PE-VeF 400.

**Table 2**

| Attribute | Content | Description |
|---|---|---|
| IdUE | Identifier | User ID |
| cqi | Integer | Channel quality indicator |
| los | Boolean | Indicates if the user is in the line of sight of the gNB/eNB. |
| sinr | Float | Signal-to-Interference-plus-Noise-Ratio. |
| rsrp | Float | Reference Signal Receive Power. |
| device Type | String | Cell phone, laptop, IoT device, censor, etc. |
| mobility Status | String | Indicates if the user is moving or fixed. |
| angleDeparture | Float | Angle of departure, the angle with which the signal reaches the UE. |
| rtt | Integer | Round Trip Time, the amount of time it takes for a signal to be sent and the amount of time to acknowledge its reception. |
| associatedPmus | Not specified | IDs of PMUs serving the user. |

Due to extreme complexity of the verification process machine learning and artificial intelligence techniques can be exploited by PE-VeF when processing the receive input data to compile appropriate models which are used during the verification process.

The PE-VeF 400 uses the if_VeF interface for exposing verification output information to a PE-VeF service consumer entity, i.e. the caller 404.

For example, the PE-VeF 400 provides an output through the if_VeF interface to subscribers of the PE-VeF service which includes a verification result which for example includes one or more of the following:
- Based on data such as latency, bandwidth, data rate, spectral efficiency, etc. the PE-VeF 400 may decide whether the association BS-PMU or PMU-UEs are serving the UEs as intended (whether a communication quality target is met) and provide a result of this decision
- Level of fulfilment of operational and configuration requirements and/or SLA
- List of issues (if any)

In case of failure of the verification and/or validation (e.g. configuration infeasible and/or communication quality target not met) the PE-VeF 400 can trigger a negotiation with involved entities (e.g. BSs 401, UEs 402, PEC 403 etc.), for example to update the configuration of the PEE or to update the configuration of the RAN.

Table 3 gives an example for a verification output sent by the PE-VeF 400 to the PEC 403 (which corresponds to the caller 404 in this case, for example) based on a configuration applied to PEEs (which the PEC 403 controls).

**Table 3**

| |
|---|
| Association verification report |
| Intended for PEC |
| |
| UE4: |
| Serving_pmus: PMU5 |
| DL data rate: 78 |
| UL data rate: 22 |
| Latency: 6 ms |
| association_status: "Low QoS for PMU5-UE4 association" |
| |
| PMU2: |
| serving_bs: BS1 |
| bandwidth: 92 MHz |
| DL_avg_spect_efficiency: 0.2 |
| UL_avg_spect_efficiency: 0.17 |
| association_status: "Low QoS for BS1-PMU2 association" |

Table 4 gives an example for configuration feasibility assessment (e.g. assessment of applicability of the configuration to a given propagation environment 100). As in the example of table 3, the PEEs involved are assumed to be PMUs in this example.

**Table 4**

| |
|---|
| PMU's configuration needs to be updated: True |
| Update request intended for : PEC |
| PMU_verification: |
| PMU1: |
| configuration_valid: false |
| errors: |
| 'pmu_unlicensed_bands: true -> pmu_channel_access_mechanism: not specified.' |
| PMU2: |
| configuration _valid: false |
| errors: |
| 'pmu_duplex_mode: TDD -> pmu_guard_period: not specified.' |
| PMU3: |
| configuration _valid: false |
| errors: |
| 'pmu_op_freq: THz -> pmu_duplex_mode != TDD' |
| 'pmu_phase_shift_type: discrete -> pmu_phase_shift_granularity not specified' |
| PMU4: |
| configuration_valid: false |
| errors: |
| 'num_possible_operations: 2 -> num_PMU_element_to_configure: 1' |
| PMU5: |
| configuration_valid: false |
| errors: |
| 'pmu_phase_shift_type: discrete -> pmu_phase_shift_granularity not specified' |

Table 5 gives another example for an output of the PE-VeF 400 for the PEC 403.

**Table 5**

| |
|---|
| PMU's configuration needs to be updated: True |
| Update request intended for : PEC |
| UE_verification: |
| UE 1: |
| UE served by BS - UE fixed - high signal strength -> remove UE from PEE served UEs |
| UE10: |
| UE not in LOS -> UE to be served by PEEs |
| UE2: |
| UE not in LOS -> UE to be served by PEEs |
| UE3: |
| UE not in LOS -> UE to be served by PEEs |
| UE4: |
| weak signal strength -> UE to be served by PEEs |
| UE5: |
| UE served by BS - UE fixed - high signal strength -> remove UE from PEE served UEs |
| UE6: |
| UE served by BS - UE fixed - high signal strength -> remove UE from PEE served UEs |
| UE7: |
| UE served by BS - UE in mobility -> UE expected to be served by PEEs |
| UE8: |
| weak signal strength -> UE to be served by PEEs |
| UE9: |
| UE served by BS - UE in mobility -> UE expected to be served by PEEs |

PEE states and/or UE states can affect the verification process.

RRC States:
- RRC Idle (RRC Idle): in this state, the UE is not connected to a base station (e.g. 5G NR (New Radio) gNB) but is still registered with the communication network 207
- RRC Connected (RRC Connected): in this state, the UE has an active connection with the gNB.
- inactive (RRC Inactive): in the RRC Inactive state, the UE maintains its context with the gNB but does not have an active connection.

The UE Attached state refers to the condition where the User Equipment (UE) has successfully completed an attachment process with the communication network 207 (e.g. 5G network). This process is crucial for enabling the UE to access network services, including both control plane and user plane services. The UE Attached state typically means the UE is in the RRC Connected state, allowing it to actively communicate with the network. The RRC Inactive state also supports the attached state by enabling quick transitions to RRC Connected.

Similar PEE states may be defined such as PEE active, PEE passive or PEE configured state.

In both the verification during provisioning (i.e. setup of the PEEs for BS-UE communication (for one or more base stations and one or more UEs) and verification during operation (i.e. BS-UE communication using the PEEs):
- if the UE is in RRC Connected state, then the PE-VeF 400 can perform the verification action using real UE data
- if the UE is in RRC Idle or RRC Inactive state then the PE-VeF 400 can use a (e.g. machine-learning) model to derive conclusions about the PEE-UE communication (or connection), based on a requested (or proposed) PEE configuration action. So, according to various embodiments, the UE state has no impact on the verification or validation of the RAN-PEE communication.

The PE-VeF 400 is a logical function which can be hosted by different entities:
- Option#1: implemented as a part of the PEC 403
- Option#2: implemented as a standalone function outside the mobile communication network 207 and outside the PEC 403
- Option#3: implemented at the RAN (i.e. as a part of a BS 401)
- Option#4: implemented as a core network function of the communication network 207
- Option#5: in an ORAN based environment it could be an rApp or an xApp
- Option#6: it could be implemented in one or more UEs 402
- Option#7: it can be implemented as part of a (3GPP) service-based management architecture (SBMA), e.g. inside an MDAF (Management Data Analytics Function) or as a new MnF (Management Function), i.e. at the management plane.
   ∘ New Enabling Data (Passed by PEC or a corresponding MnS)
      - PEE Performance Measurements
      - PEE Fault Measurements
      - PEE Geographical data
      - PEE Configuration data
      - RAN related data (location, config etc.)
      - UE related data (location, config etc.)
   ∘ Analytics Output
      - PEE-RAN communication Problem Type
      - PEE-RAN communication ProblemSeverity
      - PEE-RAN communication ProblemDetails
      - PEE-UE communication ProblemType
      - PEE-UE communication ProblemSeverity
      - PEE-UE communication ProblemDetails
      - Recommended actions

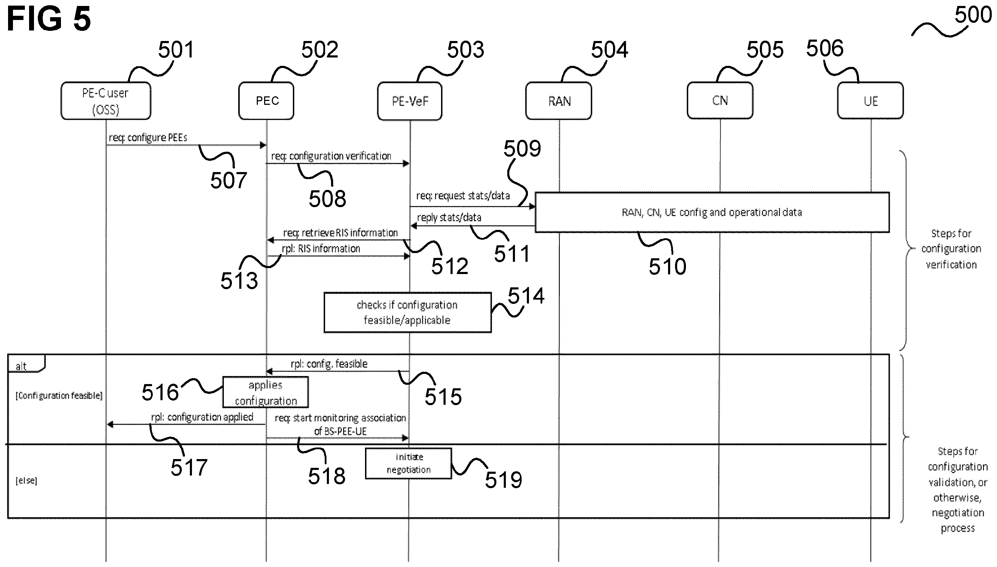

Figure 5 shows a flow diagram 500 illustrating a verification process.

A PEC user (i.e. a component of a communication network, e.g. communication network 207, e.g. an OSS) 501, a PEC 502, a PE-VeF 503, a RAN 504, a core network (CN) 505 and a UE 506 are involved in the flow.

In 507, the PEC user sends a request to the PEC 502 to configure PEEs (to support communication between the RAN 504 and the UE 506). This request may include requirements for the communication that is to be provided via the PEEs, e.g. a target communication quality.

In 508, the PEC 502 (acting as caller 404) provides a specification of a (proposed) PEE configuration to the PE-VeF 503 with a request for verification of the configuration.

In 509, the PE-VeF 503 requests input data 510 (it requires for the verification) from the RAN 504, the CN 505 and the UE 506 which provide the requested input data in 511.

In 512, the PE-VeF 503 requests information about the PEEs (e.g. RIS information) from the PEC 502 which provides the requested information in 513. This information can be also conveyed during step 508.

Having thus gathered the necessary input data the PE-VeF 503, in 514 checks whether the configuration is feasible (e.g. applicable to the respective propagation environment 100).

If the PE-VeF 503 decides that the configuration is feasible, it replies, in 515, to the PEC 502 that the configuration is feasible. The PEC, in 516, then applies the configuration, informs the PEC-user 501 about this in 517 and, in 518, requests the PE-VeF to start monitoring the BS-PEE-UE communication (e.g. to determine whether a communication quality target is met by the configuration (including a BS-PEE-UE association)).

If the PE-VeF 503 decides that the configuration is not feasible, it initiates negotiation in 519. This may include informing the PEC 502 that the configuration is not feasible which, in turn, may cause the PEC 502 to negotiate requirements of the communication (e.g. a target communication quality) with the PEC user 501.

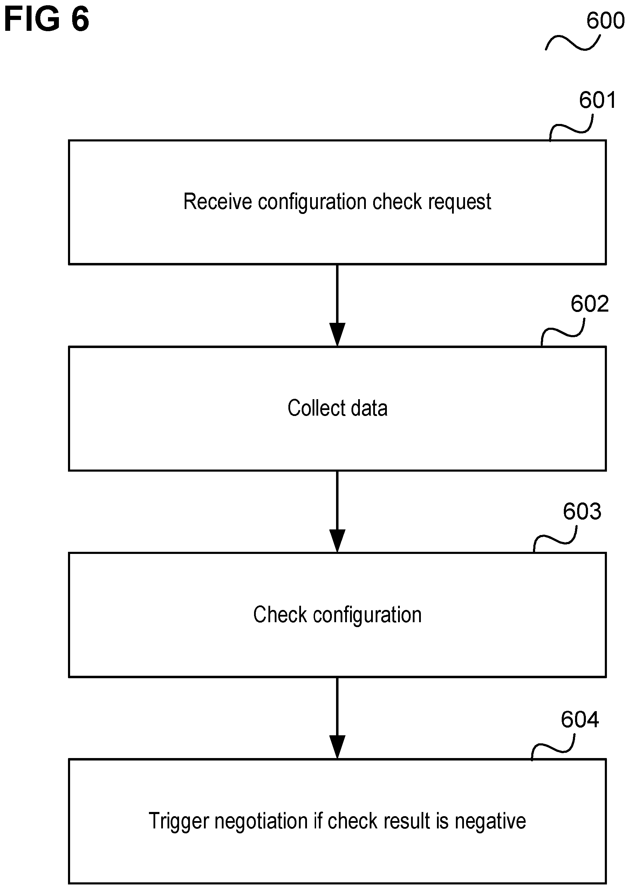

In summary, according to various embodiments, a method is provided as illustrated in figure 6.

Figure 6 shows a flow diagram 600 illustrating a method for operating a communication system comprising one or more (e.g. programmable) propagation environment elements (e.g. programmable metasurfaces, network-controlled repeaters etc.) according to an embodiment.

In 601, a request for checking whether a configuration of the one or more propagation environment elements fulfils a predetermined criterion is received. The criterion may have multiple components, e.g. that the configuration is feasible and that a communication quality target can be fulfilled with it. Accordingly, the checking may for example be a verification and/or a validation. The checking may for example include whether the channel access mechanism is correctly specified (considering the frequency band used), whether the duplex mode is correctly specified (e.g. a guard period for TDD (time division duplex) is defined), whether a phase shift granularity is defined etc. (see table 4).

In 602, data are collected from one or more controllers of the one or more propagation environment elements, one or more base stations using the one or more propagation environment elements according to the configuration and/or one or more mobile terminals using the one or more propagation environment elements according to the configuration.

In 603, it is checked using the collected data whether the configuration of the one or more propagation environment elements fulfils the predetermined criterion.

In 604, in reaction to a result of the checking being that the configuration of the one or more propagation environment elements does not fulfil the predetermined criterion, a negotiation for a change of the configuration and/or of the predetermined criterion is triggered (e.g. by sending one or more messages, e.g. a request or a report). The negotiation is for example a negotiation in which the one or more controllers of the one or more propagation environment elements, the sender of the request for checking whether the configuration fulfils the predetermined criterion and/or an entity (e.g. communication network component) which has requested that the one or more propagation environment elements are used (and in particular configured) to support a communication between the one or more base stations and the one or more mobile terminals. As a result of the negotiation, parameters are changed (e.g. a communication target), a new configuration may be determined according to the changed parameters (which may again be checked) and if the check is positive for the new configuration, it is applied to the PEEs for the communication. For example, parameters to be negotiated are related to the frequency of operation, codebook data structures used in the metasurface for a specific user etc.

In other words, according to various embodiments, a component is provided which checks (e.g. verifies and validates) a PEE configuration for a communication between at least one base station and at least one mobile terminal and, if the check is negative (i.e. verification and/or validation fails) initiates a negotiation between involved entities, in particular at least one involved PEE controller and a requesting entity of the communication (e.g. a component of the core network or the RAN of a communication network which is allowed to use the PEEs).

The approach of figure 6 enhances the telecommunication operator orchestration mechanism with verification and/or validation methods and/or mechanisms and interfaces which can handle PEEs as a telecommunication resource and enable reliable communications between PEEs and mobile terminals and between PEEs and a radio access network (i.e. one or more base stations).

The method of figure 6 may be carried out by a communication system component which may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

In an implementation, the operations of the method of figure 6 can be packaged as one function (PE-VeF) or it can be split into components (i.e. performed by an arrangement of (sub-)components which can be seen to form together a larger component providing the whole functionality, e.g., (sub-)component 1: verification of configuration, (sub-)component 2: verification whether UE is served, (sub-)component 3: monitoring of communication etc.).

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for operating a communication system comprising one or more propagation environment elements, the method comprising:
receiving a request for checking whether a configuration of the one or more propagation environment elements fulfils a predetermined criterion;
collecting data from one or more controllers of the one or more propagation environment elements, one or more base stations using the one or more propagation environment elements according to the configuration and/or one or more mobile terminals using the one or more propagation environment elements according to the configuration;
checking, using the collected data, whether the configuration of the one or more propagation environment elements fulfils the predetermined criterion; and
triggering, in reaction to a result of the checking being that the configuration of the one or more propagation environment elements does not fulfil the predetermined criterion, a negotiation for a change of the configuration and/or of the predetermined criterion.

2. The method of claim 1, wherein the predetermined criterion comprises that the configuration is feasible for the one or more propagation environments (e.g. that the one or more propagation environments have the capabilities to support the configuration, i.e. that they can be configured according to the configuration).

3. The method of claim 1 or 2, wherein the predetermined criterion comprises that a communication quality target for a communication between the one or more base stations and the one or more mobile terminals can be met.

4. The method of any one of claims 1 to 3, wherein the negotiation includes a negotiation about updating the communication quality target.

5. The method of any one of claims 1 to 4, wherein the negotiation is a negotiation between the one or more controllers of the one or more propagation environment elements and a requesting entity which has requested the more controllers of the one or more propagation environment elements to support communication between the one or more base stations and the one or more mobile terminals by the one or more propagation environment elements.

6. The method of any one of claims 1 to 5, wherein the request specifies the predetermined criterion.

7. The method of any one of claims 1 to 6, wherein the request specifies the configuration.

8. The method of any one of claims 1 to 7, comprising triggering that the one or more propagation environment elements are configured according to the configuration in reaction to the result of the checking being that the configuration of the one or more propagation environment elements fulfils the predetermined criterion.

9. The method of any one of claims 1 to 8, comprising transmitting a report including a specification of the result of the checking to the one or more controllers of the one or more propagation environment elements.

10. The method of claim 9, wherein the report includes a proposal for a change of the configuration.

11. The method of any one of claims 1 to 10, wherein the configuration is an initial configuration of the one or more propagation elements for setting up communication between the one or more base stations and the one or more mobile terminals.

12. The method of any one of claims 1 to 11, wherein the data (that is collected) includes information about capabilities of the one or more propagation elements, a communication quality experienced by the one or more mobile terminals, a communication quality experienced by the one or more base stations and/or information about an association of propagation elements to mobile terminals (i.e. about which propagation element propagates signals to or from which mobile terminal; this information is e.g. derived from an angle of arrival at the base station).

13. The method of any one of claims 1 to 12, wherein the predetermined criterion comprises that a predetermined association of the one or more base stations to the one or more propagation elements and/or of the one or more base stations to the one or more mobile terminals is used in the communication between the one or more base stations and the one or more mobile terminals.

14. A communication system component (PE-VeF in the examples below), configured to perform a method according to any one of claims 1 to 13.

## Amended claims

### Amended claims in accordance with Rule 137(2) EPC.

1. A method for operating a communication system (200) comprising one or more propagation environment elements, PEE, (104, 105, 202) interacting with one or more of the communication system's radio access networks, RAN, and directing propagation of radio waves to mobile terminals (UE) (103, 204), the communication system (200) further including a propagation environment function, PEF, (205) acting as a PEE (104, 105, 202) orchestrator, the method comprising:
receiving (508, 601) by a propagation environment verification function, PE-VeF, (206, 400) of the PEF (205) a request for checking whether a configuration of the one or more PEEs (104, 105, 202) fulfils a predetermined criterion which comprises that the configuration is feasible for the one or more PEEs (104, 105, 202) and/or that a communication quality target for a communication between one or more base stations (101, 102, 203) and one or more mobile terminals (UE) (103, 204) can be met;
collecting (602) by the PE-VeF (206, 400) data from
- one or more controllers (PEC) (403) of the one or more PEEs (104, 105, 202), wherein the one or more controllers (PEC) (403) configure and manage the one or more PEEs (104, 105, 202) and control the one or more PEEs (104, 105, 202) to allow communication between the one or more base stations (101, 102, 203) and the one or more mobile terminals (UE) (103, 204) via the one or more PEEs (104, 105, 202),
- the one or more base stations (101, 102, 203) using the one or more PEEs (104, 105, 202) according to the configuration, and/or
- the one or more mobile terminals (UE) (103, 204) using the one or more PEEs (104, 105, 202) according to the configuration;
checking (603) by the PE-VeF (206, 400), using the collected data which includes one or more of a latency, a bandwidth, a data rate and a spectral efficiency, whether the configuration of the one or more PEEs (104, 105, 202) fulfils the predetermined criterion; and
triggering (604) by the PE-VeF (206, 400), in reaction to a result of the checking being that the configuration of the one or more PEEs (104, 105, 202) does not fulfil the predetermined criterion, a negotiation for a change of the configuration and/or of the predetermined criterion; wherein the triggered negotiation is concluded between the one or more controllers (PEC) (201) of the one or more PEEs (104, 105, 202) and a requesting entity which has requested the one or more controllers (PEC) (201) of the one or more PEEs (104, 105, 202) to support communication between the one or more base stations (101, 102, 203) and the one or more mobile terminals (UE) (103, 204) by the one or more PEEs (104, 105, 202).

2. The method of claim 1, wherein, when the predetermined criterion comprises that the configuration is feasible for the one or more PEEs (104, 105, 202) the negotiation includes a negotiation about updating the communication quality target.

3. The method of claim 1 or 2, wherein the request specifies the predetermined criterion.

4. The method of any one of claims 1 to 3, wherein the request specifies the configuration.

5. The method of any one of claims 1 to 4, comprising triggering that the one or more PEEs (104, 105, 202) are configured according to the configuration in reaction to the result of the checking being that the configuration of the one or more PEEs (104, 105, 202) fulfils the predetermined criterion.

6. The method of any one of claims 1 to 5, comprising transmitting a report including a specification of the result of the checking to the one or more controllers (PEC) (201) of the one or more PEEs (104, 105, 202).

7. The method of claim 6, wherein the report includes a proposal for a change of the configuration.

8. The method of any one of claims 1 to 7, wherein the configuration is an initial configuration of the one or more PEEs (104, 105, 202) for setting up communication between the one or more base stations (101, 102, 203) and the one or more mobile terminals (UE) (103, 204).

9. The method of any one of claims 1 to 8, wherein the collected data includes information about capabilities of the one or more PEEs (104, 105, 202), a communication quality experienced by the one or more mobile terminals (UE) (103, 204), a communication quality experienced by the one or more base stations (101, 102, 203) and/or information about an association of PEEs (104, 105, 202) to mobile terminals (UE) (103, 204).

10. The method of any one of claims 1 to 9, wherein the predetermined criterion comprises that a predetermined association of the one or more base stations (101, 102, 203) to the one or more PEEs (104, 105, 202) and/or of the one or more base stations (101, 102, 203) to the one or more mobile terminals (UE) (103, 204) is used in the communication between the one or more base stations (101, 102, 203) and the one or more mobile terminals (UE) (103, 204).

11. A propagation environment verification function, PE-VeF, (206, 400) configured to perform the method according to any one of claims 1 to 10.
